# EUROPEAN PATENT APPLICATION

(11) **EP 3 476 528 A1**
(43) Date of publication of application: **01.05.2019**
(21) Application number: 17198224.2
(22) Date of filing: 25.10.2017
(51) Int. Cl.: B23P 19/00, B23P 19/02, B25J 15/00

(54) **SETTING UNIT**

(71) Applicant: Newfrey LLC, New Britain, CT 06053 (US)
(72) Inventor: Berndt, Tim, 35394 Giessen (DE); Hofmann, Stefan, 35394 Giessen (DE); Stau, Bastian, 35394 Giessen (DE)
(74) Representative: SBD IPAdmin

(57) **Abstract**

Method for setting a plug in an opening in a vehicle body component and setting unit (14) for placing plugs in openings in a vehicle body component, comprising a housing (72) having a collar (74) configured to hold a plug (18), a spindle (70) cooperating with the housing and configured to drive the collar (74) toward an opening, the spindle (70) being movable along a setting axis, and a punch (76) operately configured to drive a plug from a pre-mounted position to a locked position, in which the plug is sealingly mounted in an opening..

## Description

The present invention relates to setting units adapted to be provided in a device for setting sealing plugs, commonly referred to as "plugs" in industrial production. More particularly, the present invention is directed to a setting unit for placing plugs in openings in a vehicle body component. The invention further relates to a method for setting a plug in an opening in a vehicle body component while using the setting unit.

Coating processes are frequently used for car bodies. During such processes, the car bodies are immersed in coating baths (for example electro coat tanks). This coat protects the car's bodies in particular from corrosion. It can also provide a base for applying subsequent paint layers. Upon removal of the body from the coating bath, the liquid coating material runs off over a plurality of openings formed in the car body. These openings then have to be closed in a sealed manner to prevent the intrusion of moisture or water and to protect the vehicle from corrosion, during subsequent manufacturing steps, or even during operation. Furthermore, these openings then have to be closed in a sealed manner since they may constitute so-called sound bridges. To this end, plugs are used.

The plugs may be inserted manually into the openings by employees.

This handling has various disadvantages. The work is unergonomic for the employee placing these plugs. There is the possibility that these plugs may be placed incorrectly. It can also not be excluded that, although the plug is placed in the correct position, it is not pressed into the vehicle body with sufficient force and therefore does not have a complete sealing effect or may even fall out during the drive. Individual plugs may also simply be forgotten. As a result, moisture or water can penetrate into the vehicle body and cause corrosion.

Document DE102015211543 discloses a hand tool for setting a plug in an opening of a vehicle body. Such hand tool allows to keep a constant pushing force to set the plug ensuring a complete sealing effect of the plug.

However, depending on the vehicle model, up to several hundred plugs are to be placed, distributed over the entire production range, and these are always positioned by different employees at different stations in addition to additional assembly steps. This requires many manipulations which are time-consuming and have to be learned by numerous different employees.

There is therefore a need to automate the setting of such plugs.

Several robot-supported methods and devices for inserting the plugs are also known.

EP2368673 discloses a robot tool comprising a robot attachment region for attaching the robot tool to an industrial robot and a pushrod that can be moved back and forth and with which a plug can be picked up and advanced. A vacuum feed is integrated in the pushrod and a vacuum is applied selectively at a free end of the pushrod to hold a plug on the free end of the pushrod.

The robot tool with a vacuum source needs to be connected to a pneumatic source. Air-producing equipment can be cumbersome and a regular maintainance is needed to avoid leaks. Moreover, such equipments are very often noisy providing a negative impact in the industrial environment. The robot tool is not able to work independently and needs to stay connected to the vacuum air source, reducing the accessibility.

Document WO2015185491 discloses a device driven by a robot for automatically setting plugs. The device comprises a housing, a magazine to store the plugs and a setting unit. The setting unit is provided with a gripping head having a rotational equipment.

The rotational equipment needs further security measures and requires significant space which is not always available on a vehicle assembly line.

Document EP2987593 discloses a robot tool for placing plugs in openings comprising a placing device having an outlet and a tubular plug magazine arranged on the placing device. The plug magazine is configured to hold a plurality of loose plugs arranged in a row directly behind one another in a longitudinal direction of the plug magazine. An electric spindle is provided to push the plurality of plugs such that one plug is pushed out of the outlet and can be accommodated in a placing device and set in an opening of a vehicle body.

This device, with the spindle pushing the plurality of plugs cannot be implemented for any kind of plugs, since the plugs may stick together or, in case of plugs having two parts, an unwanted premature assembly of the two parts may occur.

It is hence an object of the present invention to at least alleviate the aforementioned shortcomings. More particularly, it is an object of the invention to provide a setting unit by means of which plugs can be placed in a more rapid and variable manner. It is also an object of the present invention to further simplify or automate the setting of plugs in industrial production, in particular of motor vehicles.

Accordingly the present invention provides a setting unit for placing plugs in openings in a vehicle body component, comprising:
- a housing having a collar configured to hold a plug,
- a spindle cooperating with the housing and configured to drive the collar toward an opening, the spindle being movable along a setting axis, and
- a punch operately configured to drive a plug from a pre-mounted position to a locked position, in which the plug is sealingly mounted in an opening,
wherein the housing comprises a first portion and a second portion, the second portion being movable with regard to the first portion between a rest position, in which the first and second portion are arranged one after the other along the setting axis and a setting position, in which the second portion is partly retracted in the first portion, wherein the spindle cooperates with the first portion, and wherein the collar is arranged in the second portion and the punch is connected to the first portion and is longitudinally movable in the second portion, in order to push a plug from the collar.

Such unit is easy to manufacture and implement. Besides, the setting of the plugs is fully automated. The setting force and stroke can be monitored and reiterate or adjusted. Such device is also robust and no premature wear is to be expected. The setting device can work with two-part plugs or plugs having different shapes.

In an embodiment the collar defines an opening and wherein the punch partly extends in the opening. The stroke of the punch and the setting forces can be used to monitor the setting of the plug. A complete control of the process is thus allowed. The plug can be easily extracted from the collar.

In an embodiment the first portion of the housing comprises a connector cooperating with the spindle. The housing and spindle can be decoupled. Thus a maintenance can be easily performed.

In an embodiment a load cell is provided in the first portion, wherein the load cell cooperates with the spindle in order to monitor the setting force and/or the stroke of the spindle. The sensor is compact. Thus the accessibility remains and a complete monitoring is provided.

In an embodiment the connector is arranged between the load cell and the spindle. The sensor is compact. Thus the accessibility remains and a complete monitoring is provided.

In an embodiment an elastic element is provided between the first portion and the second portion, allowing the relative motion of the first and second portion between the rest position and the setting position. The elastic element allows an elastic return in a rest position. No further actuator is needed.

In an embodiment a guide bushing is arranged between the first and second portion.The guide bushing improves the guidance and reduce the wear.

In an embodiment the collar is supported in the second portion by an adjustment part in order to allow a transversal play of the collar. This allows a positioning or manufacturing tolerance compensation.

In an embodiment the collar comprises a plurality of lugs adapted to grip a plug. The gripping action is easily implemented.

In an embodiment the free ends of the lugs are provided with a gripping element which protrudes into an opening provided in the collar. This allows a good gripping effect which can be adapted to the shape of the plug and compensate manufacturing tolerances.

In an embodiment in the rest position of the second portion, the punch is in a first punch position with regard to the second portion at a non-zero distance from a free end of the collar, and wherein in the setting position of the second portion, the punch is in a second punch position with regard to the second portion, in which the punch is adapted to contact and push a plug arranged in the collar.

The invention is further directed to a method for setting a plug in an opening in a vehicle body component, comprising comprising the steps of:
- Providing a setting unit;
- Providing a plug;
- Moving the spindle in a first direction along a setting axis, such that the collar grips the plug;
- Providing a vehicle body component with an opening;
- Arranging the collar with the plug in front of the opening;
- Inserting the plug in the opening by moving the spindle in the first direction such that the plug is inserted in the opening and a portion of the plug rests against an edge of the opening, and the second portion is in the rest position;

Setting the plug by further moving the spindle such that the second portion is moved from the rest position to the setting position and the punch push the plug to sealingly mount the plug in the opening. Such method is easy to implement, allow a better control of the setting forces and of the stroke and enables an automated setting of the plug. Such method con be implemented with two-part plugs.

In an embodiment during the setting step, the spindle drives the first portion in translational movement such that the second portion moves relative to the first portion from its rest position to its setting position and the punch reaches the plug. This allows a reduction of the overall dimensions of the setting unit.

In an embodiment, sensor detects the stroke of the spindle and/or the setting force, and further comprising a step for checking the correct setting of the plug in the opening. A complete monitoring is thus realized.

In an embodiment, the plug comprises an insert component and a lid component, wherein the lid component is movable relative to the insert component between a pre-mounted and a locked position, and wherein the during the inserting step, the plug is in the pre-mounted position and during the setting step, the plug is moved from the pre-mounted position to the locked position to sealingly close the opening. The locked position of the plug is easy to check and a tight closure can easily be performed.

The setting device is configured to place the plurality of plugs in the respective openings of the vehicle body component, without reloading after each individual plug placement of the plurality of plugs.

Other characteristics and advantages of the invention will readily appear from the following description of embodiments, provided as non-limitative examples, in reference to the accompanying drawings.

In the drawings:
- Fig. 1: illustrates a schematic view of a setting device according to the invention, the setting device comprising a magazine unit, a setting unit and a delivery unit.
- Fig. 2: illustrates a schematic detailed view of the magazine unit of Fig. 1;
- Fig. 3: illustrates schematically a detailed view of the delivery unit of Fig. 1;
- Fig. 4: illustrates schematically the interface between an end of the magazine unit and the delivery unit of Fig. 1;
- Fig. 5: illustrates schematically a detail of the setting unit of Fig. 1 with a spindle;
- Fig. 6: illustrates schematically a setting head of the setting unit of Fig. 1;
- Fig. 7: illustrates schematically a loading station and a buffer for loading a plurality of plugs in the magazine unit of Fig. 2;
- Fig. 8: illustrates schematically the filling of the plugs from the buffer to the magazine unit;
- Fig. 9: illustrates an embodiment of a plug which may be used by the setting device of Fig. 1;
- Fig. 10: is a flow chart schematically illustrating different method steps for setting a plug in an opening of a vehicle body.

On the different figures, the same reference signs designate identical or similar elements.

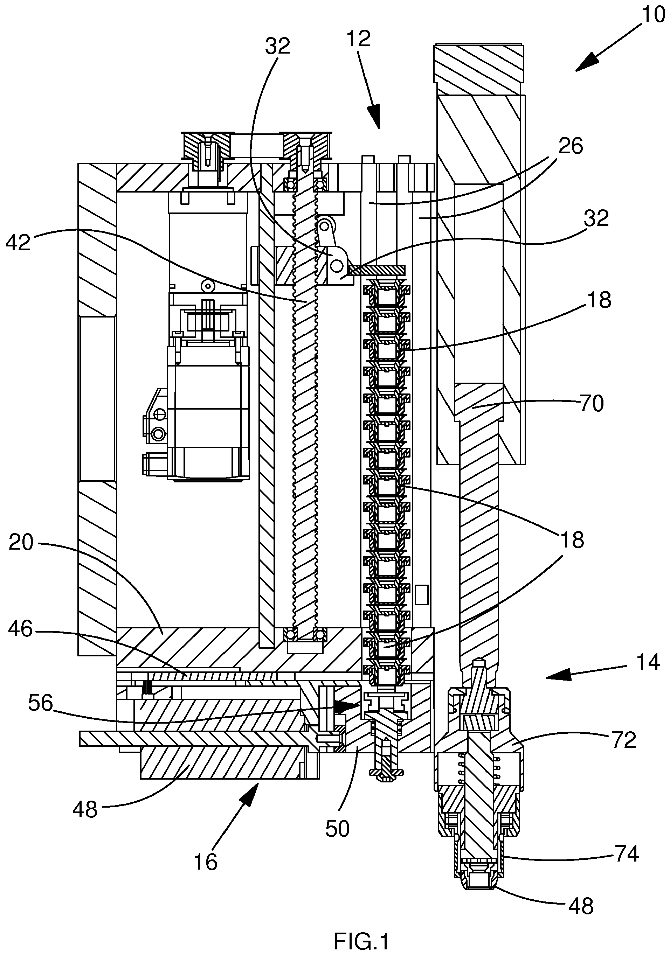

Referring now to Fig. 1 a setting device 10can be seen. The setting device 10 comprises a magazine unit 12, a setting unit 14 and a delivery unit 16. The magazine unit 12 is adapted to store a plurality of plugs 18. The delivery unit 16 is adapted to deliver one plug 18 from the magazine unit 12 to the setting unit 14. The setting unit 14 is adapted to set the plug 18 in an opening of a vehicle body (not represented).

### Magazine unit

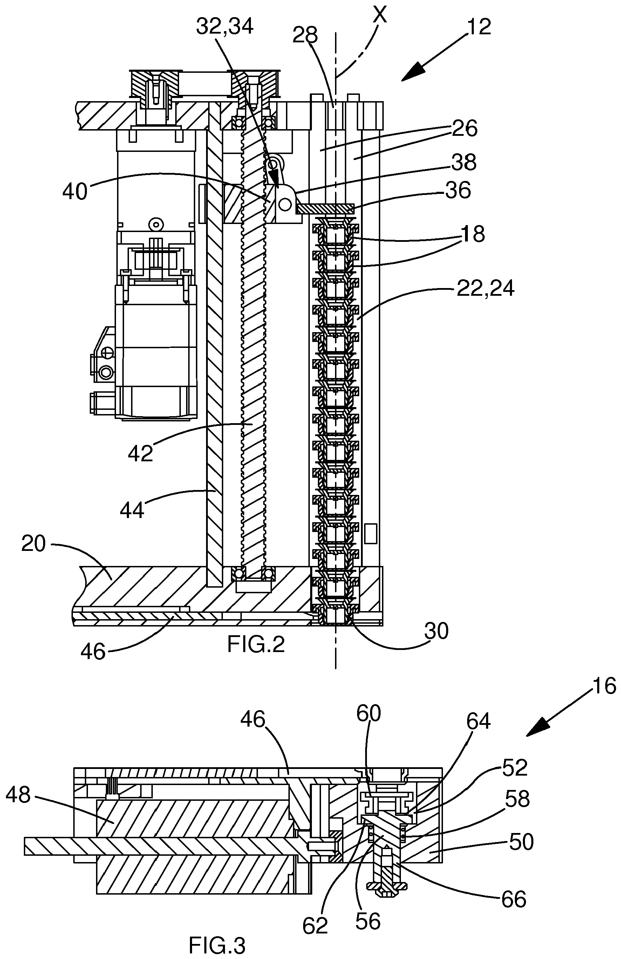

The magazine unit 12 is more particularly illustrated in Fig. 2. The magazine unit 12 is arranged in a housing 20 of the setting device 10. The magazine unit 12 comprises a receiving part 22 adapted to receive the plurality of plugs. The receiving part 22 comprises a longitudinal recess 24 extending along a longitudinal axis X.

The longitudinal recess 24 is defined or formed or delimited for example by a plurality of rods 26. As illustrated in the Figures, four rods 26 are provided. However, in another embodiments, three rods may be implemented to define the longitudinal recess 24.The rods 26 are arranged such that the longitudinal recess 24 allows a stack of plugs 18 to be stored in. In other words, a plurality of plugs 18 is arranged in the longitudinal recess 24 in a row. In other embodiments, the magazine unit 12 may be provided with a receiving part having a tubular recess or a square cross-section recess with lateral walls.

The rods 26 may have a similar length along the longitudinal axis X and/or similar general dimensions. The rods 26 may be spaced apart from each other such that the distance between two rods sensibly corresponds to the diameter or to the general outer shape of one plug 18. The rods 26 may be arranged such that they form the summits of a square in a plan orthogonal to the longitudinal axis X.

The longitudinal recess 24 contains only plugs 18 of one type, i.e. having the same diameter or the same general dimensions. However, in an embodiment, the setting device 10 may be provided with a second magazine unit (not represented) cooperating either with the delivery unit 16 and the setting unit 14, or with a second delivery unit and/or second setting unit (not represented).

The four rods 26 delimit a circle in a plane orthogonal to the longitudinal axis, the diameter of the circle corresponding to the pre-determined diameter or dimensions of the plug 18.

The longitudinal recess 24 is designed to receive a pre-determined quantity of plugs 18.

The longitudinal recess 24 comprises a first end 28 and a second end 30. The second end 30 forms an outlet of the magazine unit 12 such that one plug 18 can be pushed out of the outlet toward the delivery unit 16. The first end 28 forms an inlet and is adapted to allow the filling of the longitudinal recess 24 with a plurality of plugs 18.

The second end 30 may be provided with a closing mechanism adapted to open and close the outlet. For example the mechanism comprises one, two or more fingers which are movable between a closed position and an opened position. In the closed position, the fingers extend to prevent any plug to get out of the longitudinal recess. In the opened position, the fingers do not obstruct the outlet and a plug can get out of the longitudinal recess. The fingers may rotate between the closed position and the opened position.

The magazine unit 12 further comprises a holder 32. The holder 32 is designed to be stressed against the stack of plugs 18. Thus, the holder 32 is able to maintain a predetermined pressure on the plug 18 closest to the inlet. The predetermined pressure is constant and independent from the number of plugs 18 remaining in the longitudinal recess 24.

For instance, every time a plug 18 is being pushed out of the outlet toward the delivery unit 16, the length of the stack of plugs 18 along the longitudinal axis X is reduced and the holder 32 follows the motion of the stack of plugs such that the holder 32 always exerts a force or pressure on the stack of plugs through the closest plug to the inlet. In other words, the holder 32 holds down the stack of plugs avoiding an unwanted tilt or motion of the plugs 18. The holder 32 is therefore configured such that the plugs 18 are always held in the longitudinal recess 24 in a stable position, i.e., in a tilt-proof manner.

When the longitudinal recess 24 is entirely filled with plugs from the outlet to the inlet, the holder 32 is arranged proximate the inlet. As the number of plugs in the longitudinal recess 24 decreases, the holder 32 moves toward the outlet.

The holder 32, as illustrated in the figures, may comprise an elastic holding element 34 with a flap 36 connected to a spring 38 to provide a tolerance compensation. The flap 36 may directly or indirectly contact the nearest plug 18 to the inlet and exerts a force on said plug 18. The flap 36 extend in the longitudinal recess 24.

The flap 36 is connected to a guide carriage 40, which allows a translation of the flap 36 in a direction parallel to the longitudinal axis X every time a plug 18 is being pushed out of the magazine unit. The guide carriage 40 may, as illustrated, cooperate with a threaded rod 42 and a guide rod 44. The threaded road 42 is designed to allow a translation of the flap 36 corresponding to the height of a plug 18 along the longitudinal axis X. The guide rod 44 ensure the translation of the guide carriage 40 without rotation. In another embodiment, the guide carriage 40 may cooperate with an actuator, for example a linear actuator, in order to guide the guide carriage 40 along the longitudinal axis X.

The guide rod 44 and the threaded rod 42 may extend parallel to each other and parallel to the longitudinal recess 24, such that they can guide and actuate the flap 36 in the longitudinal recess 24 along the longitudinal axis X.

The flap 36 may be rotated in a first position called the "filling position" to open the longitudinal recess for filling the plurality of plugs 18. Once the plugs 18 have been filled, the flap 18 may be rotated in a second position called the "delivery position", in which said flap 36 contacts the closest plug 18 to the inlet. In the first position, the flap 36 does not extend in the longitudinal recess 24 anymore and does not obstruct the filling of plugs 18. In the second position, the flap 36 does extend in the longitudinal recess 24.

In the filling position, the flap may extend parallel to the longitudinal axis X. In the delivery position, the flap may extend in a plane orthogonal to the longitudinal axis X.

Alternatively, the holder 32 may be provided with an actuator which allows a translation of the flap along the longitudinal axis to follow the motion of the stack of plugs.

The flap 36 or the holder 32 may also be provided with one or more sensor(s). The sensor may be used to keep a constant force on the stack of plugs or to actuate the motion of the flap 36 or to detect any error which may occur. For example the sensor may be able to detect the number of plugs and/or if a plug is still available in the longitudinal recess 24.

When the longitudinal recess 24 is empty or nearly empty, the holder 32 may be moved from the outlet to the inlet, for example with an actuator, and the flap may be moved in its first position to allow a re-fill with another stack of plugs.

### Delivery unit

The magazine unit 12, and more particularly the outlet (or second end 30) of the magazine unit 12, cooperates with the delivery unit 16. The delivery unit 16 comprises a slider 46.

The slider 46 is adapted to slide along a transversal axis, the transversal axis being orthogonal to the longitudinal axis X. The slider 46 is movable from a first position, in which the outlet of the longitudinal recess 24 is closed and a second position in which the outlet of the longitudinal recess 24 is opened. An actuator actuates the slider 46.

The slider 46 is for example flat and extends a in a plane orthogonal to the longitudinal axis X. The slider comprises a first edge oriented towards the outlet, when the slider is in the second position. The edge may be tapered such that the slider 46 is able to transversally slide between two plugs 18 and delimit the two plugs 18 by closing the outlet. In other words the slider may be in the form of a plate with a tapered edge. The slider may be arranged directly under the outlet of the longitudinal recess 24. Thus, the slider 46 helps isolating and/or separating one plug from the plurality of plugs arranged in the longitudinal recess 24.

Instead of a slider, tongues may be provided to axially separate two plugs 18. The tongues are for example movable between a closed-position and an opened position. The tongues may be rotationally movable and/or translationally movable. The tongues may be pre-stressed in the closed position and move to the opened-position with a mechanical contact with another part from the delivery unit, for example. The tongues may also be actuated through an actuator.

The delivery unit 16 further comprises a main body 48 having a drawer 50, for example movable in the transversal direction. The drawer 50 comprises a receiving opening 52 adapted to receive a plug 18. The drawer 50 further comprises a retaining part 54 adapted to retain one plug 18.

The receiving opening 52 is provided with a counter bearing 56. The counter bearing 56 cooperates with a counter bearing spring 58 to compensate height variations of the plugs 18 which may occur due to manufacturing tolerances. More particularly the counter bearing spring 58 allows a smooth transfer of the plug from the magazine to the delivery unit 16.

The counter bearing 56 comprises a receiving surface 60 facing the plug 18 and adapted to receive the plug. 18 The receiving surface 60 may be defined as illustrated in Fig. 3 by a flange 62 with a circular protrusion 64, the edges of the plug 18 resting against the flange 62 and around the circular protrusion 64. The shape of the receiving surface 60 corresponds to the shape of the plug 18, and more particularly to the rear shape of the plug 18, such that the counter bearing 56 and the plug 18 are arranged with a form-fitting cooperation, and the plug 18 is received and held in the receiving opening 52 in a pre-determined position, which does not change when the drawer moves. For example, the protrusion can have a semi-spherical shape.

The flange 62 is provided at one end of a shaft 66. The flange 62 comprises an inner surface facing the shaft 66 and an outer surface opposite to the inner surface. The outer surface form the receiving surface 60. The counter bearing spring 58 is provided partly around the shaft 66 and rests against the inner surface of the flange 62.

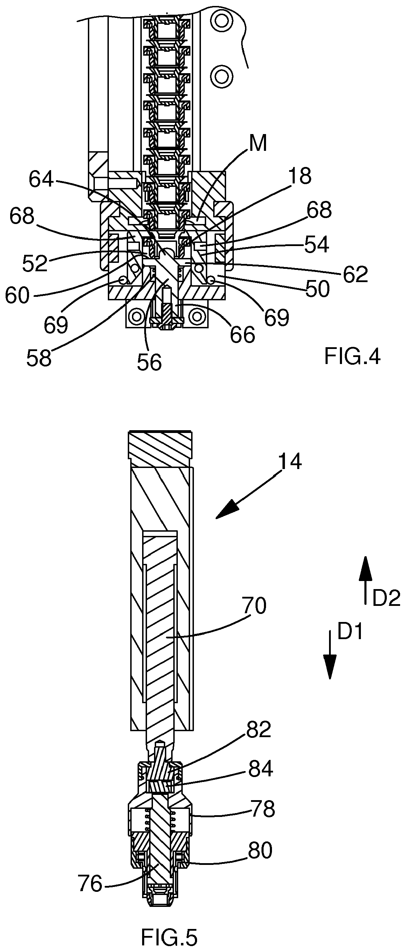

The retaining part 54, as shown in Fig. 4, comprises two hooks 68 as depicted in Fig. 4. The two hooks 68 are elastically mounted on the main body 48. The two hooks 68 may move apart from each other to open the receiving opening 52 allowing a plug 18 to enter in said receiving opening 52. In this position, the plug can enter in the receiving opening 52 and can take place on the counter bearing 56. This position is called the "receiving position" and is illustrated in Fig. 4.

In an embodiment, springs are provided to elastically force the hooks 68 in a closed position (also called "transfer position"). In the closed position of the hooks, the plug 18 extending in the receiving opening 52 cannot move away from said receiving opening 52. The hooks 68 thus prevent any loss of plug 18.

For example each hook 68 is rotationally arranged on the main body 48, the rotational centre being proximate the flange 62 or the shaft 66, and the hooks 68 extending longitudinally and having a free end above the receiving opening 52. In other words, the hooks 68 encompass the receiving opening.

Each hook 68 may be L-shaped and may comprise a first segment and a second segment, the second segment extending sensibly perpendicular to the first segment. The second segments close the receiving opening 52. The first segment is provided with a pivot for the rotation of the hooks 68 between the transfer and the receiving position.

In an alternative embodiment, the hooks 68 may translate between the transfer and the receiving position.

A plug arranged in the delivery unit is fixedly retained between the counter bearing 56 and the hooks 68, such that the plug cannot move when retained in the delivery unit 16.

A bearing unit can be provided to allow the translation of the drawer in the transversal direction with regard to the housing.

The drawer and the slider are actuated together.

A unique actuator or two separate actuators may be provided to control the position of the slider and the drawer or to operate the same. For instance, a unique actuator is provided such that the control of the delivery unit is simplified.

The main body 48 may be provided with a first and/or a second abutment protrusions 69. One hook 68 abuts against the first abutment protrusion and/or the other hook abuts against the second abutment protrusion when moving from the receiving position to the transfer position. The abutment protrusions 69 allow to control the spacing between the two hooks 68.

### Cooperation between magazine unit and delivery unit

The delivery unit 16 cooperates with the magazine unit 12 to separate one plug 18 from the plurality of plugs provided in the longitudinal recess 24. The closing mechanism adapted to open and close the outlet moves to an open position, in which the outlet of the longitudinal recess 24 is opened. The holder 32, pushing the stack of plugs 18, push the distal plug (in other words the closest plug to the outlet) toward the drawer 50.

The drawer 50 is in a receiving position and the hooks of the drawers are open, such that a plug may be inserted in the receiving opening and may be arranged on the counter bearing 56. For example a mechanical connection between the outlet of the magazine unit 12 and the hooks 68 is created in order to open the hooks 68 and the receiving opening 52.

The plug 18 can then be transferred in the receiving opening 52 from the longitudinal recess 24. The plug 18 moves along the longitudinal axis X through the counter bearing spring 58 with a specific motion. The plug is pushed along the longitudinal axis X until the hooks moves into the closed position. The hooks 68 are released from the receiving position to the transfer position and the plug 18 is securely maintained in the receiving opening.

In the closed position (or transfer position) of the hooks 68, the plug is fitted between the hooks 68 and the counter bearing 56 such that said plug remains in position, independently of the movement of the delivery unit.

The slider 46 can move in order to axially separate one plug 18 from the plurality of plugs arranged in the longitudinal recess 24. The rear side of the isolated plug 18 cooperates with the counter bearing. Once one plug 18 is transferred in the receiving opening, the closing mechanism moves back to its closed position. The closing mechanism and/or the slider 46 prevent any further unwanted plug for entering the receiving opening 52.

For instance, once the plug is securely retained between the hooks 68 and the counter bearing 56, the slider 46 can close the outlet of the magazine unit, such that the drawer can move toward the setting unit 14 with the outlet of the magazine unit being closed.

The drawer 50 with the plug 18 isolated from the plurality of plug 18 can move toward the setting unit 14.

### Setting unit

The setting unit 10, as represented in Fig. 1 and Fig. 5 comprises a spindle 70, a setting housing 72 having a collar 74 configured to hold a plug 18 and a punch 76 operately configured to drive a plug 18 from a pre-mounted position, to a locked position in which the plug 18 is sealingly mounted in an opening.

The setting housing 72 comprises a first portion 78 and a second portion 80. The second portion 80 is movable with regard to the first portion 78 between a rest position and a setting position. In the rest position, the first and second portions 78, 80 are arranged one after the other along the setting axis. In the setting position the second portion is partly retracted into the first portion. The first portion 78 is partly hollow in order to receive the second portion 80.

The spindle 70 is for example an electro-spindle and actuated with an electric actuator. The spindle is movable in translation along an axis, for example along the setting axis. The spindle 70 cooperates with the first portion 78. For example a connector 82 is provided between the first portion 78 and an end of the spindle 70. The connector 82 connects the end of the spindle 70 to the first portion, such that a translation of the spindle causes or involves a translation of the first portion 78.

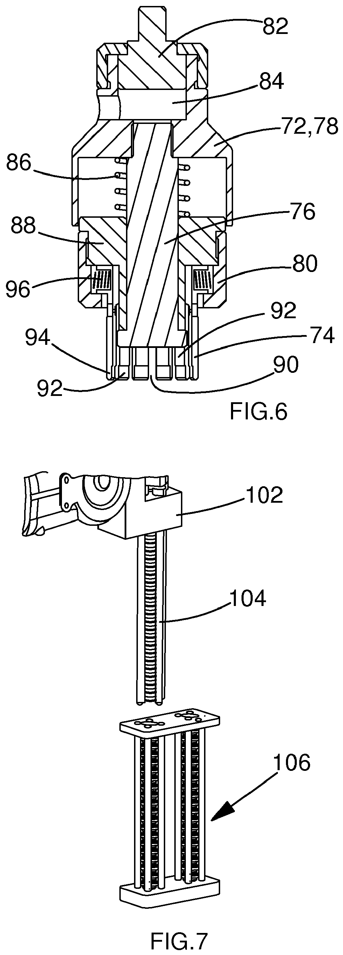

A load cell 84 (or measuring box) may be provided in the first portion 78. The load cell 84 cooperates with the spindle in order to monitor the setting force of the spindle or the load applied by the spindle 70. The connector is for instance, as depicted in Fig. 6, arranged between the load cell 84 and the spindle 70.

The punch 76 is connected to the first portion 78. For example a press-fit connection is provided between the punch 76 and the first portion 78. The punch is arranged coaxially with the spindle and extends along the setting axis.

The punch 76 extends in the setting housing 72 toward the second portion 80. An elastic element 86 is provided between the first portion 78 and the second portion 80. The elastic element 86 allows the relative motion of the first and second portions 78, 80 between the rest position and the setting position. The elastic element 86 is for example a spring arranged around a portion of the punch 76. A first end of the spring rests against the first portion 78. For example, as illustrated in Fig. 6, a first end of the spring rests against a surface of the first portion 78, the surface being adjacent to the press-fit connection between the punch and the first portion 78.

The second free end of the spring rests against a guide bushing 88. The guide bushing 88 is connected to the second portion 80 and is arranged between the first and second portion 78, 80 in order to guide the relative movement between the first portion 78 and the second portion 80.

The punch 76 may be movably arranged in a through hole provided in the guide bushing 88, such that the punch 76 is longitudinally movable in the second portion 80. The punch comprises an enlarged end which emerges in the collar 74.

The collar 74 is connected to the second portion 80. The collar 74 defines an opening 90. The punch 76 partly extends in the opening 90.

The collar 74 comprises a plurality of lugs 92 adapted to grip a plug 18. The plurality of lugs 92 is evenly distributed around the opening 90. Each lug 92 extends along an axis parallel to the setting axis and in a direction opposite to the first portion 78. The free ends of the lugs are provided with a gripping element 94. The gripping element 94 protrudes into the opening 90. The lugs are flexible.

The collar 74 is supported in the second portion by an adjustment part 96. The adjustment part 96 allows a transversal movement (or play) of the collar. For example the adjustment part 96 comprises a plurality of springs evenly distributed around the collar 74. The plurality of springs allows a tolerance compensation.

### Cooperation between delivery unit and setting unit

The delivery unit 16 (and more particularly the drawer 50) is movable from the magazine unit 12 to the setting unit 14 in a delivering position. In the delivering position, the drawer 50 is moved below the spindle 70 and the collar 74, such that the plug 18 is in alignment with a collar axis and/or a spindle axis (both axis sensibly corresponding to a setting axis).

The spindle 70 moves in a first direction D1 towards the receiving opening 52 of the delivery unit 12, such that the collar 74 contacts the retaining part 54 and opens the retaining part 54 in order to have access to the plug 18 located in the receiving opening 52. In an alternative embodiment, the opening of the retaining part 54 may be automated.

The collar 74 collects the plug 18 from the receiving opening 52 with a gripping action. The plurality of lugs catches a portion of the plug. For example the plug may be a two-part plug (as described below) and the collar 74 may catch a first part (a lid component for example) of the plug.

As previously mentioned, the collar 74 is movably connected to the second portion 80, such that a mechanical misalignment may be compensated in a direction transverse to the setting axis. This axial movement enable to compensate manufacturing or position tolerances.

Once the plug 18 has been collected from the receiving opening 52, the spindle moves in a second direction, opposite to the first direction. The collar 74 with the plug 18 are thus retracted and the delivery unit (and more particularly the drawer 50) can move back towards the magazine unit 12. Thus, the stroke for setting the plug is not obstructed by the delivery unit 18 anymore, and the plug retained in the collar 74 may be fixed in an opening.

The spindle 70 can then move in the first direction again towards a workpiece provided with an opening, in order to fix the plug in the opening. The setting axis is then sensibly coaxially arranged with the main axis of the opening. The spindle can drive the collar 74 and the plug 18 towards the opening, insert the plug 18 in the opening and then set the plug in the opening.

The plug is more particularly set by further moving the spindle 70 in the first direction such that the second portion is moved from the rest position to the setting position and the punch 76 push the plug 18 to sealingly mount the plug in the opening.

### Plug

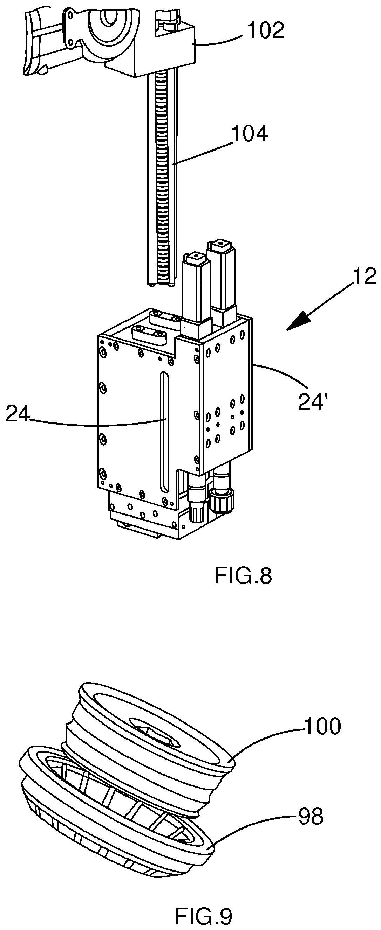

As previously mentioned, the plug 18 may be a two-parts plug. The plug 18 has for example an insert component 98 and a lid component 100 as depicted in fig. 9, which show a possible embodiment of a plug. The lid component 100 is adapted to cooperate with the insert component 98 in a pre-mounted position and in a locked position.

For instance, the lid component 100 is movable between the pre-mounted position and the locked position. In the pre-mounted position, the plug 18 may be inserted into the opening. The lid component 100 is then retained in the pre-mounted position until said lid component 100 is moved in the locked-position. In the locked-position the plug tightly closes the opening in a radial direction. In other words, the plug 18 reliably seals against the edge of the opening in the locked position of the lid component 100. The plug 18 is thus firmly held in the opening.

The insert component 98, as shown in Fig. 9, comprises a tubular body, a sealing element and a circumference collar. The tubular body defines a hole. The hole is delimited by an inner surface of the tubular body. The hole is a through hole. However in other embodiments, the hole might be a blind hole.

The inner surface of the tubular body (or of the latching tongues) is provided with a pre-mounting element and/or a locking element. Several embodiments of the pre-mounting element and the locking element might be used. The surface condition of the inner surface of the tubular body may be the pre-mounting and/or the locking element. The pre-mounting element and the locking element of the insert component 98 may be surface discontinuities. For example, the pre-mounting element and the locking element may be protrusions and/or recesses which cooperate with other parts or surfaces of the lid component in order to maintain or to force the lid component in the pre-mounted position or in the mounted position.

The sealing element extends through the collar. The sealing element may be elastically and/or plastically deformed between the pre-mounted position and the locked position (as described below).

The inner and/or outer surface of the tubular body may be provided with ribs. The ribs allow a better fixation of the overmoulded sealing element. Moreover, the ribs allow the insert component to better sit in the opening with limited movement. More particularly, the ribs may allow a better fixation in the opening and may reduce the risk of disassembly.

The insert component 98 is adapted to cooperate with the lid component 100. More particularly, the pre-mounting element and the locking element are adapted to cooperate with pre-mounting contour and locking contour of the lid component 100. The cooperation between the pre-mounting element and the pre-mounting contour on one hand, and between the locking element and the locking contour on the other hand may be a snap fit and/or a press fit assembly (or connection). For example, in the pre-mounted position, a snap fit connection may be provided. In the locked position, a press fit connection and/or a snap fit connection may be provided.

As shown in Fig. 9, the lid component comprises a cylindrical general shape with a top side and a lateral side.

The pre-mounting contour and/or the locking contour may be a ring and/or a notch and/or a groove. In some embodiments, the pre-mounting contour and the locking contour may coincide.

The lid component may be made in polyamide material. For example, the lid component 100 may be made in glass fibre reinforced polyamide.

In the pre-mounted position, the pre-mounting contour cooperates with the pre-mounting element and a lateral side of the lid component is partly inserted into a hole of the insert component. A form fit connection can be provided in the pre-mounted position. The lid component and the insert component are securely attached to each other in the pre-mounted position such that a transfer of the entire plug is possible without any risk of loss of one of the components.

### Setting of the two-parts plug

The plug 18 (with the lid component in the pre-mounted position) is inserted in the opening of a body structure by the spindle 70 which drives the collar such that the plug is inserted in the opening. A circumference rim of the lid component and/or the insert component rests against a first side of the body structure (or in other words rests against the edge of the opening). The insert component 98 extends in the opening.

In the pre-mounted position, the sealing element is facing the edge of the opening but may not be in contact with such edges.

To tightly close the opening, the lid component in the pre-mounted position is moved along the setting axis toward the insert component 98 up to the locked position. More particularly, after insertion of the plug in the opening in the pre-mounted position, the spindle moves further in the first direction D1 to move the lid component 100 from the pre-mounted position to the locked position. For instance, once the plug has been inserted in the opening in the pre-mounted position, the second portion 80 rests against an edge of the opening in the body structure (or workpiece). The spindle causes the first portion 78 to further translate in the first direction. However, the second portion 80 cannot be further translated, since it is in abutment against the workpiece. The second portion thus moves from its rest position in which the first and second portion are arranged one after the other along the setting axis to its setting position, in which the second portion is partly retracted in the first portion. During the retraction of the second portion 80 in the first portion 78, the punch is moved closer and closer to the lid component 100 until it touches the lid component 100 and forces the lid component 100 to move toward the insert component from its pre-mounted position to its locked position.

By moving toward the insert component, the lid component urges (or forces) the sealing element radially outward toward the edges of the opening. In the locked position, the locking contour cooperates with the locking element. The lid component 100 is securely held within the insert component. The plug 18 is securely and tightly held within the opening. More particularly, the sealing element is press-fitted in the opening.

Once the plug has been set, the delivery unit 16 can deliver another plug to the setting unit 14 to set another plug 18 in another opening.

### Loading magazine

The plugs 18 are loaded in the magazine unit through a loading robot 102 as shown in Fig. 7 and Fig. 8.

For instance, in a pre-stage, the plugs 18 are arranged in a bulk container. The loading robot 102 is adapted to extract from the bulk container a plurality or a pre-determined number of plugs 18. The plugs 18 extracted from the bulk container are arranged in a row. For example an arrangement 104 with an aperture similar to the longitudinal recess 24 with the rods 26 and a closing mechanism already described for the magazine unit is provided, such that the plugs are aligned.

The pre-determined number of plugs can be pre-stored in a buffer 108, as depicted in Fig. 7. The buffer may be adapted to receive one or more row(s) of plugs. For example, as illustrated in Fig. 7, the buffer 108 receives two rows of plugs 18.

Once the longitudinal recess 24 in the magazine unit 12 is empty. A signal can be sent to the loading robot such that the loading robot transport a row of plugs from the buffer to the magazine unit. During the transport, the closing mechanism closes the row of plugs 18. During the transfer, the closing mechanism is opened and the row of plugs can be transferred into the longitudinal recess.

The magazine unit 12 of Fig. 8 comprises two longitudinal recesses 24, 24', such that two different kind of plugs can be stored in the magazine unit. For example the first kind of plugs 18 is circular and has a first diameter. The second kind of plugs is circular and has a second diameter. The first diameter is greater than the second diameter. In another embodiment, one kind of plugs can be circular whereas the second kind of plugs is provided with an oblong section.

### Method to set the plug

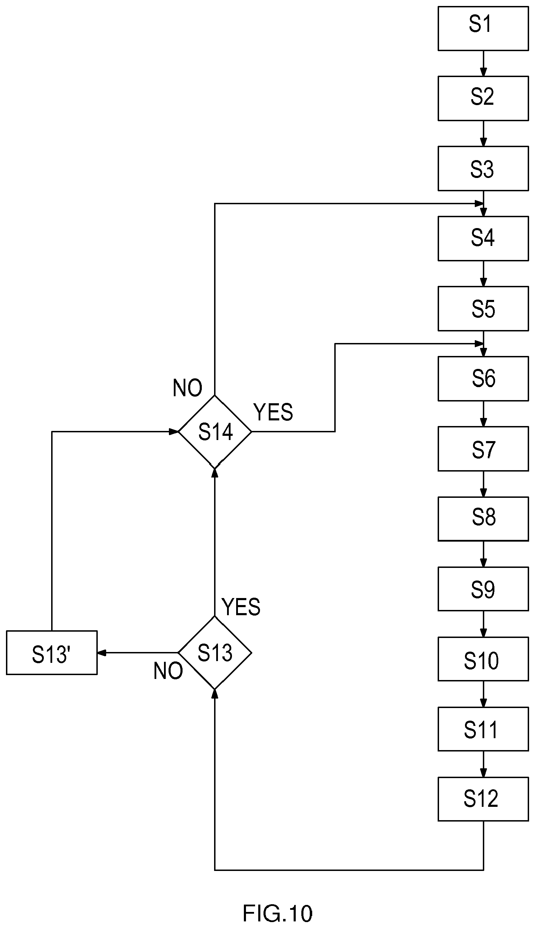

Fig. 10 shows a flow chart illustrating different method steps for setting a plug in an opening of a vehicle body.

In a first step (S1), the plugs 18 are stored in a bulk container. In a second step (S2), the loading robot 102 extracts a pre-determined number of plugs 18 from the bulk container and stacks them such that they are arranged in a row. In an alternative embodiment, the plugs 18 may directly be delivered stacked in a row. Thus, the loading robot 102 just need to select and/or collect the pre-determined number of plugs needed. In a third step (S3), which may be optional, the loading robot transfers the stack of pre-determined number of plugs 18 in a buffer.

In a fourth step (S4), the loading robot 102 transfers the pre-determined number of plugs 18 from the buffer (or directly from the bulk container) to the magazine unit 12. In a fifth step (S5), the plugs 18 are transferred and stored in the longitudinal recess 24.

In a subsequent step (S6), one plug 18 from the plurality of plugs stored in the longitudinal recess 24 is transferred into the delivery unit 16. The delivery unit 16 then delivers the isolated plug 18 to the setting unit 14 (step S7). Step 6 and step 7 can be implemented for example when a signal is sent to the setting device 10, mentioning that a plug is needed for a setting.

The spindle 70 is moved in the first direction such that the collar 74 can collect the isolated plug from the receiving opening 52 (step S8).

The spindle 70 is then moved in the second direction D2, opposite the first direction D1 (step S9). The delivery can return toward the magazine unit 12.

In step 10 (S10), the setting device 10 and/or the setting unit 14 is arranged facing the opening in which a plug has to be set. The setting device and/or the setting unit can be provided with and/or connected to a robot arm enabled to move in three dimensional plane/axis.

In a subsequent step (S11) the spindle is driven in the first direction D1 such that the plug can be inserted in the opening.

Then the spindle is further moved in the first direction D1 to lock the plug in the opening, such that the plug tightly seal the opening (S12).

A control is then done to evaluate if the plug is correctly set in the opening (S13). For example, the measurement of the sensors concerning the stroke and/or the load are compared to a target value. A processor can determine if the values are the same or sensibly similar. If the values are the same, the methods continues to the next step (S14). If the value are dissimilar, then an additional step (S13') consisting of recording the number of the plug and the position of the plug incorrectly set is realized. Thus, the plug incorrectly fitted can be removed and fitted again and/or better fitted in the opening.

In a subsequent step (S14), a control is made to check that the longitudinal recess still comprises a plug. If a plug is still available in the magazine unit 12, then step S6 and the subsequent steps are performed. If the longitudinal recess 24 is empty, then step S4 and the subsequent steps are performed.

The disclosed step S1 to S14 may be differently performed. Some steps may be performed simultaneously or in a different order. Besides, some steps may be ignored or some steps may be added to the method.

## Claims

1. A setting unit (14) for placing plugs in openings in a vehicle body component, comprising:
• a housing (72) having a collar (74) configured to hold a plug (18),
• a spindle (70) cooperating with the housing and configured to drive the collar (74) toward an opening, the spindle (70) being movable along a setting axis, and
• a punch (76) operately configured to drive a plug from a pre-mounted position to a locked position, in which the plug is sealingly mounted in an opening,
**characterized in that**
the housing comprises a first portion (78) and a second portion (80), the second portion (80) being movable with regard to the first portion between a rest position, in which the first and second portion are arranged one after the other along the setting axis and a setting position, in which the second portion is partly retracted in the first portion,
**in that** the spindle (70) cooperates with the first portion, and
**in that** the collar (74) is arranged in the second portion and the punch (76) is connected to the first portion and is longitudinally movable in the second portion, in order to push a plug from the collar (74).

2. Setting unit (14) according to claim 1, wherein the collar (74) defines an opening (90) and wherein the punch (76) partly extends in the opening.

3. Setting unit (14) according to any of the preceding claims, wherein the first portion (78) of the housing comprises a connector (82) cooperating with the spindle (70).

4. Setting unit (14) according to any of the preceding claims, wherein a load cell (84) is provided in the first portion, wherein the load cell cooperates with the spindle (70) in order to monitor the setting force and/or the stroke of the spindle (70).

5. Setting unit (14) according to claims 3 and 4, wherein the connector (82) is arranged between the load cell (84) and the spindle (70).

6. Setting unit (14) according to any of the preceding claims, wherein an elastic element (86) is provided between the first portion and the second portion, allowing the relative motion of the first and second portion between the rest position and the setting position.

7. Setting unit (14) according to claim 6, wherein a guide bushing (88) is arranged between the first and second portion.

8. Setting unit (14) according to any of the preceding claims, wherein the collar (74) is supported in the second portion by an adjustment part (96) in order to allow a transversal play of the collar (74).

9. Setting unit (14) according to any of the preceding claims, wherein the collar (74) comprises a plurality of lugs (92) adapted to grip a plug (18).

10. Setting unit (14) according to claim 9, wherein the free ends of the lugs (92) are provided with a gripping element (94) which protrudes into an opening provided in the collar (74).

11. Setting unit (14) according to any of the preceding claims, wherein in the rest position of the second portion (80), the punch (76) is in a first punch position with regard to the second portion at a non-zero distance from a free end of the collar (74), and wherein in the setting position of the second portion, the punch (76) is in a second punch position with regard to the second portion, in which the punch (76) is adapted to contact and push a plug arranged in the collar (74).

12. Method for setting a plug in an opening in a vehicle body component, comprising:
- Providing a setting unit (14) according to any of claims 1 to 11;
- Providing a plug (18);
- Moving the spindle (70) in a first direction along a setting axis, such that the collar (74) grips the plug;
- Providing a vehicle body component with an opening;
- Arranging the collar (74) with the plug in front of the opening;
- Inserting the plug (18) in the opening by moving the spindle (70) in the first direction such that the plug is inserted in the opening and a portion of the plug rests against an edge of the opening, and the second portion is in the rest position;
- Setting the plug by further moving the spindle (70) such that the second portion is moved from the rest position to the setting position and the punch (76) push the plug to sealingly mount the plug in the opening.

13. Method for setting a plug according to claim 12, wherein during the setting step, the spindle (70) drives the first portion in translational movement such that the second portion moves relative to the first portion from its rest position to its setting position and the punch (76) reaches the plug.

14. Method for setting a plug according to claim 12 or claim 13, wherein a sensor (84) detects the stroke of the spindle (70) and/or the setting force, and further comprising a step for checking the correct setting of the plug in the opening.

15. Method for setting a plug according to any of claims 12 to 14, wherein the plug (18) comprises an insert component (98) and a lid component (100), wherein the lid component is movable relative to the insert component between a pre-mounted and a locked position, and wherein the during the inserting step, the plug is in the pre-mounted position and during the setting step, the plug is moved from the pre-mounted position to the locked position to sealingly close the opening.
